# EUROPÄISCHE PATENTSCHRIFT

(11) **EP 1 178 891 B1**
(45) Veröffentlichungstag und Bekanntmachung des Hinweises auf die Patenterteilung: **08.02.2006**
(21) Anmeldenummer: 00938289.6
(22) Anmeldetag: 17.05.2000
(51) Int. Cl.: B60C 23/00

(54) **VERFAHREN FÜR DIE AUTOMATISCHE BETÄTIGUNG EINER REIFENFÜLLANLAGE FÜR KRAFTFAHRZEUGE**
METHOD FOR THE AUTOMATIC OPERATION OF A TIRE INFLATION DEVICE FOR MOTOR VEHICLES
PROCEDE POUR ACTIONNER AUTOMATIQUEMENT UN SYSTEME DE GONFLAGE DE PNEUS DE VEHICULES AUTOMOBILES

(30) Priorität: 17.05.1999 AT 87199
(43) Veröffentlichungstag der Anmeldung: 13.02.2002
(73) Patentinhaber: Steyr-Daimler-Puch Spezialfahrzeug GmbH, 1110 Wien (AT)
(72) Erfinder: SKOFF, Gerhard, A-1230 Wien (AT)
(74) Vertreter: Rippel, Andreas
(86) Internationale Anmeldenummer: PCT/AT2000/000137
(87) Internationale Veröffentlichungsnummer: WO 2000/069662

(56) Entgegenhaltungen:
- EP-A- 0 504 913

## Beschreibung

Die Erfindung bezieht sich auf ein Verfahren für die automatische Betätigung einer Reifenfüllanlage für Kraftfahrzeuge.

Ein solches Verfahren ist aus der EP-A-0 504 913, welche als nächstliegender Stand der Technik angesehen wird, bekannt. Diese sieht beim Start des Fahrezeugs eine automatische Messung des Reifendrucks und eine automatische Überwachung des Fahrzustandes vor, d.h. Gelände- oder Strassenfahrt, der durch die Überwachung eines Signalgebers für den Allradantrieb, eines Signalgebers für die Differentialsperre und eines manuellen schaltbaren Signalgebers erfolgt, wobei bei Fahrzustand Straße die Geschwindigkeit des Fahrzeugs gemessen wird, und bei Entsprechung von Vorgabewerten der Reifendruck entsprechend der Geschwindigkeit angehoben wird, und wobei bei Fahrzustand Gelände der Reifendruck bis auf einen für den Reifen zulässigen Druck abgesenkt wird.

Ein Blick in die PKW-Welt vor noch wenigen Jahren zeigt, daß Allradfahrzeuge im wesentlichen in zwei Kategorien eingeteilt werden können:
Entweder waren allradgetriebene PKW meist hochmotorisierte Top-Varianten von Mittelbis Oberklassefahrzeugen, um einerseits durch die Aufteilung des Antriebsmomentes auf zwei Achsen die Belastung des Antriebsstranges zu reduzieren, und andererseits auch die Fahrsicherheit zu erhöhen. Oder waren allradgetriebene PKW reine Geländefahrzeuge, die in erster Linie für Off-Road Einsatz konzipiert waren.

Die stetige Weiterentwicklung dieser Fahrzeuge, das steigende Freizeitangebot und steigender Wohlstand haben den Markt für Sport Utility Vehicles geöffnet. Dies sind Fahrzeuge, die dem Trend zur aktiven Freizeitnutzung folgen und neben Wirtschaftlichkeit und Straßenkomfort auch eine eingeschränkte Geländetauglichkeit aufweisen. Zahlreiche Hersteller bieten mittlerweile diesen Kompromiß zwischen geländegängigem Fahrzeug und komfortabler Limousine an.

Die wesentlichen Charakteristika dieser Fahrzeuge sind einerseits eine kostengünstige Off-Road Technologie, die sich im wesentlichen auf elektronische Antriebsstrangeingriffe stützt und nicht für den Dauereinsatz im schweren Gelände gedacht ist, und andererseits eine sehr großzügige, geräumige und komfortable Limousinenausstattung, die bequemes Reisen auch über längere Strecken ermöglicht.

Die gegenständliche Erfindung zielt im wesentlichen auf diese Kategorie Fahrzeuge ab, ist jedoch auch bei reinen Off-Road Fahrzeugen und Limousinen sinnvoll einzusetzen.

Speziell bei militärischen Off-Road Fahrzeugen ist es Stand der Technik, die Fahrzeuge mit einer zentralen Reifenfüllanlage auszustatten. Dabei kann der Fahrer während der Fahrt den Reifendruck entweder beliebig stufenlos anheben oder absenken, sowie vorgegebene, für das jeweilige Gelände typische Druckeinstellungen anwählen.

Der Vorteil der stufenlosen Anwählung ist einerseits die optimale Anpassungsfähigkeit an das jeweilige Gelände und den jeweiligen Beladezustand, zum anderen können Temperatureinflüsse kompensiert werden.

Der Zweck derartiger Anlagen liegt im wesentlichen in der Traktionserhöhung durch Reduktion des spezifischen Bodendruckes bei Druckminderung im Reifen.

Ein weiteres Anwendungsgebiet für eine Reifenfüllanlage ist die komfort- und stabilitätsbeeinflussende Funktion. Bei hochmotorisierten Limousinen der Mittel- und Oberklasse besteht das grundlegende Problem, daß bei hohen Geschwindigkeiten aus fahrdynamischen Gründen ein sehr straffes Fahrwerk erforderlich ist, im unteren Geschwindigkeitsbereich jedoch der Schwerpunkt auf dem Insassenkomfort liegt.

Vorliegende Erfindung hat es sich zum Ziel gesetzt, die beiden grundlegenden Funktionen, Traktion und Komfort, zu verknüpfen, wobei ein notwendiger Eingriff mit einer Sensorik erkannt und ohne Zutun des Fahrers durchgeführt wird.

Erreicht wird dies durch ein Verfahren nach Anspruch 1.

Dabei erfolgt eine automatische Überwachung des Fahrzustandes Gelände oder Straßenfahrt durch die Überwachung des Schalters eines Untersetzungsgetriebes und/oder der Niveausensoren bei vorhandener Niveauregulierung auf frequente Fahrzeugbewegungen und/oder der Raddrehzahlsignale auf unzulässige Differenzdrehzahlen und/oder von Differentialsperren und/oder eines manuell zu betätigenden Traktionswahlschalters.
Beim erfindungsgemäßen Verfahren wird auf Grund verschiedener Sensorsignale einerseits eine automatische geschwindigkeits- und lastabhängige Einstellung des Reifendruckes bewirkt, andererseits kann eine wesentliche Traktionshilfe für den Geländeeinsatz erreicht werden. Das Erkennen der Notwendigkeit des Eingriffs zur Traktionserhöhung erfolgt auf Grund von Sensorsignalen, wobei eine Logik Informationen über unterschiedliche Raddrehzahlen, benötigte Untersetzungsgetriebe und Differentialsperren unterschiedlichster Art verknüpft. Dabei können Informationen von elektrischen Differentialsperren, schlupfbegrenzenden Differentialen und formschlüssigen Sperren verarbeitet werden.

Das Wesentliche an vorliegender Erfindung ist, daß das Gesamtsystem prinzipiell automatisch ohne Zutun des Fahrers den jeweils richtigen Reifendruck, errechnet aus Achslast, Fahrgeschwindigkeit und Traktionserfordernis/Geländegegebenheit, ansteuert, jedoch gewisse Einstellungen auch auf Fahrerwunsch vorgenommen werden können.

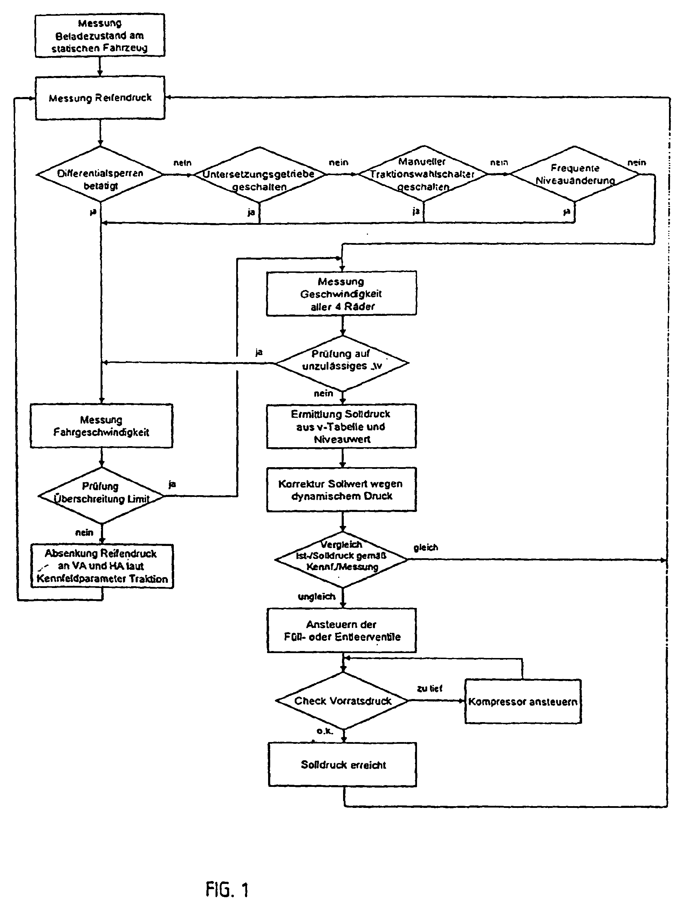

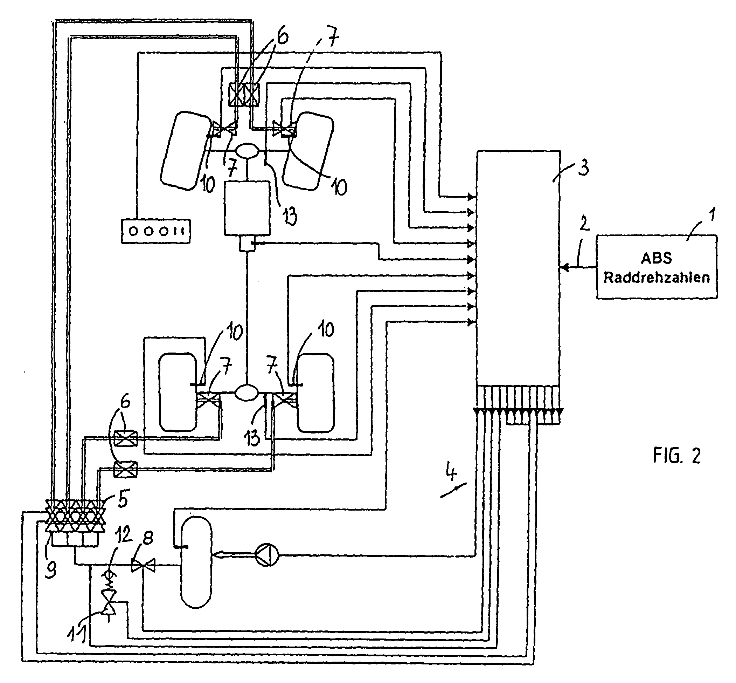

Fig. 1 zeigt die logischen Schritte des Verfahrens oder Programms mittels eines Flußdiagramms. Die detaillierte Funktion für Füllen und Entleeren sowie weitere mögliche Funktionen sind nachstehend an Hand der Fig. 2 beschrieben.

### FÜLLEN

Überschreitet die Fahrgeschwindigkeit, die über das ABS-System 1 des Fahrzeuges erfaßt und über Bus 2 an die CPU 3 weitergeleitet wird, die in den Regelkennfeldern jeweils vorgegebenen Schaltwerte, erfolgt ein Signal von der CPU 3 über die Steuerleitungen 4 zum Füllen der Reifen. Die Steuerventile 5 werden elektromagnetisch betätigt und die Druckluft strömt über die Steuerluftdurchführung des Dichtpaketes 6 zu den Radventilen 7 und öffnet die Ventile für die Füllung. Nun strömt Druckluft über das gleichzeitig betätigte Einlaßventil 8, das Füllventil 9 und die Luftdurchführung des Dichtpaketes 6 über das jeweils offene Radventil 7 in den Reifen. Die statischen Druckwerte werden über den Sensor 10 an die CPU 3 gemeldet. Wesentlich ist hierbei, daß während des Füll- oder Ablaßvorganges sich der Gesamtdruck aus statischem und dynamischem Druck zusammensetzt, jedoch nur der statische Luftdruck mit einfachen Mitteln gemessen werden kann. Aufgrund der Fördercharakteristik des Kompressors und einem allfälligen Pufferspeicher kann für jedes einzelne System der Gesamtdruck empirisch erfaßt werden und in weiterer Folge mit hinreichender Genauigkeit errechnet werden. Bei Erreichen dieses Rechenwertes wird der Vorgang unterbrochen, die Ventile fallen ab und werden durch ihre Federn zurückgestellt; Steuer- und Fülleitung werden bis zum Radventil 7 entlüftet, das Dichtpaket 6 wird drucklos. Dies ist wesentlich, da im drucklosen Zustand die Dichtungen kaum auf Verschleiß belastet werden, was deutlichen Einfluß auf die Lebensdauer des Dichtpaketes hat.

### ENTLEEREN

Bei Geschwindigkeitsabnahme unter die in den Regelkennfeldern jeweils vorgegebenen Schaltwerte erfolgt ein Signal von der CPU 3 zum Entleeren. Das Einlaßventil 8 bleibt geschlossen, das Steuerventil 5 und das Füllventil 9 werden ebenso geöffnet wie das Ablaßventil 11. Druckluft strömt über das Steuerventil 5 und die Steuerluftdurchführung des Dichtpaketes 6 zum Radventil 7 und öffnet es. Druckluft vom Reifen strömt nun über das geöffnete Radventil 7, die Luftdurchführung des Dichtpaketes 6 zum ebenfalls geöffneten Füllventil über ein Rückschlagventil 12 zum Ablaßventil 11 und über einen Schalldämpfer ins Freie. Der Vorgang wird so lange durchgeführt, bis der vom Drucksensor 10 an die CPU 3 gemeldete Wert dem errechneten Sollwert entspricht. Die Ventile fallen anschließend ab und werden durch Federn zurückgestellt. Die Steuerleitungen der Ventile 5 und die Fülleitungen 9 werden bis zu den Radventilen 7 entlüftet, das jeweilige Dichtpaket 6 wird drucklos. Das Rückschlagventil 12 verhindert, daß der vorgesehene Mindestluftdruck unterschritten wird, es unterbricht den Ablaßvorgang bei Erreichen desselben.

### DEFEKTERKENNUNG

Als sinnvolle Erweiterung können Reifendefekte erkannt werden. Die berührungslose Reifenluftdruckmessung 10 überwacht kontinuierlich den Reifendruck; wenn es zu Druckminderungen außerhalb der Regelvorgänge kommt, die nicht mit den Regelkennwerten der CPU 3 und dem aktuellen, von den vorstehend genannten Sensoren gemeldeten Fahrzustand übereinstimmen, liegt ein Reifendefekt vor. Um Fehlmeldungen zu vermeiden, ist eine entsprechende Offset-Zeit zu berücksichtigen.

Neben optischen und akustischen Warnungen besteht die Möglichkeit, die Fahrgeschwindigkeit auf einen gerade noch zulässigen Wert gemäß den Regelkennfeldern abzuregeln.

Schleichende Reifendefekte mit geringem Druckverlust können kompensiert werden. Der Fahrer erhält die entsprechende Defektwarnung, jedoch bleibt das Fahrzeug uneingeschränkt mobil.

Dieser Defektüberwachungsalgorithmus kann redundant durch das von elektronischen Stabilisierungsprogrammen auf Grund von Drehzahldifferenzen gegenüber dem Sollwert errechnet werden, oder diesen auch auf Grund höherer Präzision und Kompensationsmöglichkeit bei schleichenden Defekten ersetzen.

### SELBSTTEST bzw. DRUCKKONTROLLE

Die hier vorgeschlagene Anlage geht von einer berührungslosen Reifenluftdruckmessung aus, die im Fahrzeugsystem bereits enthalten ist. Sollte das aus verschiedenen Gründen nicht möglich sein, können alternativ dazu auch von der CPU 3 periodische Reifendruckprüfungen durchgeführt werden. Dabei wird von der CPU 3 ein Ablaßvorgang eingeleitet; das Ablaßventil 11 wird jedoch elektrisch nicht angesteuert, es bleibt geschlossen. Der dazu notwendige Sensor 14 meldet den Druckwert über die entsprechende Steuerleitung 4 zurück an die CPU 3, anschließend wird der Test beendet oder auf Grund der Meßergebnisse gefüllt oder abgelassen.

Dieser Test sollte beim Eintreten von bestimmten Fahrzuständen, z. B. Geradeausfahrt mit konstanter Geschwindigkeit, wiederholt werden. Damit kann auch eine zuverlässige Defekterkennung durchgeführt werden.

### TRAKTIONSHILFE bzw. GELÄNDEFAHRT

Neben diversen Traktionshilfen, wie ASR oder Sperrdifferentiale, ist es fallweise sinnvoll, z. B. bei Geländefahrten oder zum Verhindern von Durchrutschen beim Anfahren, die Traktion zusätzlich durch Absenkung des Reifenluftdruckes, und damit unmittelbar verbunden mit einer Vergrößerung der Reifenaufstandsfläche, einer Senkung des Bodendruckes und einer Steigerung des Kraftschlußpotentials, zu erhöhen. Dies soll erfindungsgemäß durch eine Sensorik erkannt werden. Je nach Fahrzeugausstattung bieten sich dafür mehrere Möglichkeiten an:
- Überwachung des Schalters eines eventuell vorhandenen Untersetzungsgetriebes, oder
- Überwachung der Niveausensoren bei vorhandener Niveauregulierung auf frequente Fahrzeugbewegungen, oder
- Überwachung der Raddrehzahlsignale auf unzulässige Differenzdrehzahlen, oder
- Differentialsperren, sowohl mechanische als auch elektronische, oder
- Überwachung eines manuell zu betätigenden Traktionswahlschalters.

Wird ein derartiger Fahrzustand über die Sensorik erkannt, folgt der Schluß, daß sich das Fahrzeug im Gelände befindet, und der Reifendruck wird auf ein auf das jeweilige Fahrzeug spezifisch abgestimmtes Niveau abgesenkt. Ein Ausgleich des Beladezustandes bleibt aktiv, jedoch wird die geschwindigkeitsabhängige Regelung unterdrückt.

### AUSGLEICH des BELADEZUSTANDES

Bei Inbetriebnahme des Fahrzeuges wird das System initialisiert. Dabei werden die Informationen von Niveausensoren 13 der beiden Achsen analysiert und ein entsprechend dem Beladezustand des Fahrzeuges ermittelter Druckwert dem Basiskennfeld Reifendruck über Fahrgeschwindigkeit zugeschlagen. Da der Beladezustand in den meisten Fällen quasistatisch ist, wird dieser Zuschlagsfaktor nur bei der Initialisierung ermittelt, um Fehlanalysen auf Grund fahrdynamischer Unstetigkeiten auszuschließen.

### ANPASSUNG des REIFENINNENDRUCKES an die FAHRGESCHWINDIGKEIT

In der CPU 3 ist ein Kennfeld Reifeninnendruck über Fahrgeschwindigkeit sowohl für die Vorderachse als auch für die Hinterachse abgelegt. Dieses Kennfeld wird mit der aktuellen Fahrgeschwindigkeit, ermittelt über die Raddrehzahlsensoren des ABS-Systems 1 und über Bus 2 an die CPU 3 weitergeleitet, verglichen und daraus wird ein Solldruck für die Reifen der Vorder- und der Hinterachse errechnet. Dieser Sollwert wird noch um den Zuschlagsfaktor auf Grund des Beladungszustands korrigiert, und mit den tatsächlichen Ist-Werten verglichen. Bei Abweichungen erfolgt achsweise eine Korrektur des jeweiligen Reifeninnendruckes auf den Sollwert.

Die Kennfelder können beliebige Form haben, und sowohl kontinuierlich als auch in diskreten Schritten verlaufen. Weiters kann auch eine Hysterese in bezug auf Geschwindigkeitssteigerung oder -absenkung vorgesehen werden.

Diese Anpassung des Reifeninnendruckes an die Fahrgeschwindigkeit funktioniert alternativ zu Funktion "Traktion"; wenn diese aktiv wird, wird die Geschwindigkeitsanpassung vorübergehend deaktiviert.

## Patentansprüche

1. Verfahren für die automatische Betätigung einer Reifenfüllanlage für Kraftfahrzeuge, wobei
bei Start des Fahrzeuges automatisch der Reifendruck gemessen und eine automatische Überwachung des Fahrzustandes Gelände oder Straßenfahrt durch die Überwachung des Schalters eines Untersetzungsgetriebes und/oder der Niveausensoren bei vorhandener Niveauregulierung auf frequente Fahrzeugbewegungen und/oder der Raddrehzahlsignale auf unzulässige Differenzdrehzahlen und/oder von Differentialsperren und/oder eines manuell zu betätigenden Traktionswahlschalters erfolgt, und
- bei Fahrzustand Straße die Geschwindigkeit aller vier Räder gemessen und ein unzulässiger Radgeschwindigkeitsunterschied geprüft wird, und
- bei nichtbestehender Geschwindigkeitsabweichung der Sollwert des Reifendruckes ermittelt und bei Abweichung des Istwertes vom Sollwert bis zum Erreichen des Sollwertes die Füll- bzw. Entleerventile der Reifen angesteuert und der Solldruck hergestellt wird, und wobei
- bei bestehender Geschwindigkeitsabweichung der Räder so, wie bei Fahrzustand Gelände, die Fahrgeschwindigkeit gemessen und mit einem Grenzwert verglichen wird, und
- bei nichtbestehender Überschreitung dieses Grenzwertes die Entleerventile der Reifen angesteuert und ein für Geländefahrt voreingestellter Reifendruck hergestellt wird,
wobei nach jedem Durchlaufen dieser Verfahrensschritte der Reifendruck gemessen und der Zyklus von vorne begonnen wird.

2. Verfahren nach Anspruch 1, **dadurch gekennzeichnet, daß** der Beladezustand am stehenden Fahrzeug gemessen wird.

3. Verfahren nach Anspruch 1 oder 2, **dadurch gekennzeichnet, daß** der Sollwert des Reifendruckes um einen Zuschlagfaktor auf Grund des Beladungszustandes korrigiert wird.

4. Verfahren nach einem der Ansprüche 1 bis 3, **dadurch gekennzeichnet, daß** bei Feststellung einer Druckminderung außerhalb der Regelvorgänge durch die kontinuierliche Reifendruckmessung ein Warnsignal betätigt und/oder die Fahrgeschwindigkeit auf einen noch zulässigen Wert gemäß den Regelkennfeldern abgeregelt wird.

## Claims

1. A method for automatic operation of an inflation device for motor vehicle tyres, wherein the tyre pressure is measured automatically when the vehicle is started and the driving conditions, whether on-road or off-road, are monitored automatically by monitoring any reduction gear switch and/or the level sensors if the vehicle is equipped with a ride leveler for frequent movements of the vehicle, and/or the wheel revolution signals for inadmissible revolution differences, and/or differential locks, and/or a manually operated traction selection switch, and
under road driving conditions, the speed of all four wheels is measured and a check is performed to ensure that the difference between the speed of the wheels is within a certain tolerance, and
if the difference between the wheel speeds is within the tolerance, the tyre pressure setpoint is calculated, and if actual value deviates from the setpoint, the inflation or deflation valves are activated until the setpoint is reached and established, and wherein
if the difference between the wheel speeds is not within the tolerance, the driving speed is measured as for off-road driving conditions and this is compared with a threshold value, and
if this threshold value is not exceeded, the deflation valves are activated and a tyre pressure that has been preset for off-road driving is established,
wherein the tyre pressure is measured each time these steps are completed, and the cycle is repeated from the beginning.

2. The method according to claim 1, **characterized in that** the loading condition of the stationary vehicle is measured.

3. The method according to claim 1 or 2, **characterized in that** the setpoint for the tyre pressure is corrected by the addition of an application factor based on the loading condition.

4. The method according to any of claims 1 through 3, **characterized in that** if a loss of pressure not associated with the regulating processes is detected by the system for constant tyre pressure measurement, a warning signal is triggered and/or the driving speed is governed to a value that is permissible according to the control characteristics.

## Revendications

1. Procédé pour l'actionnement automatique d'un appareil de gonflage de pneumatiques de véhicules automobiles, dans lequel, dès le démarrage du véhicule, la pression des pneumatiques est mesurée et une surveillance automatique de l'action de conduite tout terrain ou route se fait par surveillance du commutateur d'un groupe réducteur et/ou par surveillance des capteurs de niveau si une régulation du niveau est prévue pour des mouvements fréquents du véhicule et/ou par surveillance des signaux de vitesse roue pour détecter des différences de vitesse inadmissibles et/ou par surveillance de blocages différentiel et/ou d'un commutateur-sélecteur destiné à être actionné manuellement, et
- en action de conduite route, la vitesse des quatre roues est mesurée et on vérifie si la différence vitesse roues est inadmissible, et
- s'il n'y a pas de différence de vitesse, la valeur de consigne de la pression des pneumatiques est calculée et si la valeur réelle est différente de la valeur de consigne, les valves de gonflage et de dégonflage des pneumatiques sont activées jusqu'à obtention de la valeur de consigne et la pression de consigne est générée, et dans lequel
- lorsqu'il y a différence de vitesse entre les roues, la vitesse de roulage est mesurée comme pour l'action de roulage tout terrain et comparée à une valeur limite, et
- si cette valeur limite n'a pas été dépassée, les soupapes de décharge des pneumatiques sont activées et une pression de pneumatique préréglée pour une situation de roulage tout terrain est générée,
la pression des pneumatiques étant mesurée et le cycle étant recommencé depuis le début après la mise en oeuvre de chacune des étapes du procédé.

2. Procédé selon la revendication 1, **caractérisé en ce que** le chargement du véhicule à l'arrêt est mesuré.

3. Procédé selon la revendication 1 ou 2, **caractérisé en ce que** la valeur de consigne de la pression des pneumatiques est corrigée en y rajoutant un facteur en fonction du chargement du véhicule.

4. Procédé selon l'une quelconque des revendications 1 à 3, **caractérisé en ce que**, lorsqu'une baisse de pression a été constatée qui n'a rien à voir avec les processus de régulation relatifs au mesurage continu de la pression des pneumatiques, un signal d'avertissement est actionné et/ou la vitesse de roulage est rabaissée à une valeur encore admissible conformément aux diagrammes de caractéristiques de régulation.
